# EUROPÄISCHE PATENTSCHRIFT

(11) **EP 2 411 657 B1**
(45) Veröffentlichungstag und Bekanntmachung des Hinweises auf die Patenterteilung: **27.05.2020**
(21) Anmeldenummer: 10708569.8
(22) Anmeldetag: 16.03.2010
(51) Int. Cl.: F02N 15/02, F16D 41/064, F02N 15/06, F02N 15/00

(54) **FREILAUF FÜR EINEN STARTER VON EINER BRENNKRAFTMASCHINE, STARTER UND HERSTELLUNGSVERFAHREN**
FREEWHEEL FOR AN ENGINE STARTER, STARTER AND MANUFACTURING METHOD
ROUE LIBRE POUR DÉMARREUR D'UN MOTEUR À COMBUSTION, DÉMARREUR ET PROCÉDÉ DE FABRICATION

(30) Priorität: 23.03.2009 DE 102009001738
(43) Veröffentlichungstag der Anmeldung: 01.02.2012
(73) Patentinhaber: SEG Automotive Germany GmbH, 70499 Stuttgart (DE)
(72) Erfinder: STAHL, Michael, 70499 Stuttgart (DE); HUEMMER, Steffen, 74366 Kirchheim/N (DE)
(74) Vertreter: Steinbauer, Florian
(86) Internationale Anmeldenummer: PCT/EP2010/053377
(87) Internationale Veröffentlichungsnummer: WO 2010/108822

(56) Entgegenhaltungen:
- DE-A1- 2 435 811
- GB-A- 1 026 948
- JP-U- 48 049 442
- JP-U- 54 131 627
- JP-U- 55 014 089
- JP-U- 59 144 232

## Beschreibung

### Stand der Technik

Die Erfindung bezieht sich auf einen Freilauf für einen Starter von einer Brennkraftmaschine, wobei der Freilauf mit einem Drehmomentübertragungsteil und einem Mitnehmer mit einer inneren Keilbahn, in der Rollen angeordnet sind, ausgebildet ist, wobei das Drehmomentübertragungsteil einen Rollenbund aufweist, auf dessen äußeren zylindrischen Umfang die Rollen angeordnet sind, das Drehmomentübertragungsteil im axialen Querschnitt gesehen eine umlaufende Schulter an einem Ende des Rollenbunds aufweist, die von einer an einer Führungsscheibe anliegenden Haltescheibe axial zurückgehalten wird, um das Drehmomentübertragungsteil axial zu sichern und die Haltescheibe, die Führungsscheibe und die Rollen mittels einer Verschlusskappe mit dem Mitnehmer gesichert sind. Die Erfindung bezieht sich auch auf einen Starter.

Die Erfindung bezieht sich ferner auf ein Verfahren zum Herstellen eines Freilaufs für einen Starter von einer Brennkraftmaschine mit einem Drehmomentübertragungsteil, wobei in einem Mitnehmer Rollen reibschlüssig eingesteckt werden, eine Führungsscheibe als Tragring mit Stützansätzen und Federn eingesetzt wird, das Drehmomentübertragungsteil mit einem Rollenbund als innere Stütz- und Lauffläche für die Rollen eingeführt wird.

Es sind verschiedene Freilaufeinrichtungen in Andrehvorrichtungen, sogenannten Startern, aus Stand der Technik bekannt. Der Freilauf dient dazu, eine Überholmöglichkeit für ein Starterritzel bereitzustellen, wenn die Brennkraftmaschine gestartet ist und in der Dekompressionsphase schneller dreht als ein Startermotor in dem Starter vorgibt.

Die DE 575 151 beschreibt einen Freilauf für einen Anlasser von einer Verbrennungskraftmaschine. Ein Mitnehmer überdeckt Rollen und ist mit einer Ringscheibe verschlossen. Der Mitnehmer mit der Ringscheibe bildet eine Kammer mit eingeschlossenen Rollen.

Die DE 30 40 074 A1 beschreibt einen Rollenfreilauf für einen Starter von einer Brennkraftmaschine. Eine ringförmige Führungsscheibe mit kreisförmigem Außenumfang weist axiale Vorsprünge mit einem Führungselement auf, um schmiermitteldicht und drehsicher mittels des Führungselements mit einer vergrößerten Labyrinthwirkung angeordnet zu sein.

Die DE 31 38 466 A1 beschreibt einen Rollenfreilauf für einen Starter von einer Brennkraftmaschine. Der Starter verbindet für einen Andrehvorgang der Brennkraftmaschine eine drehfeste Antriebswelle eines Andrehmotors mit einem Zahnkranz der Brennkraftmaschine. Eine Führungsscheibe aus Kunststoff schließt Zwischenräume von einem mit einem Führungsteil ausgebildeten Rollenfreilauf ab. An der Führungsscheibe liegt eine Haltescheibe an. Eine Mitnehmerhülse hält mit einer formschlüssig gesicherten Verschlusshülse die Feilaufteile in einem Innenraum zusammen.

Aus der JP 48 049442 U ist ein Freilauf bekannt, bei dem zwei in etwa halbkreisförmige Scheiben verwendet werden, die mit jeweils einer Stufe an deren Enden überlappen und damit zusammen einen Ring bilden. Damit wird einerseits eine einfache Montage, andererseits aber auch eine hinreichende Abdichtung erreicht.

Aus der DE 24 35 811 A1 ist ein Freilauf bekannt, bei dem eine Führungsscheibe und eine Haltescheibe verwendet werden. Weitere Freiläufe sind aus der JP 54 131627 U und der JP 59 144232 U bekannt.

Es ist Aufgabe der vorliegenden Erfindung einen Freilauf, einen Starter und ein Herstellungsverfahren der eingangs genannten Art derart weiterzubilden, dass ein Drehmomentübertragungsteil sicher in axialer Richtung gehalten wird und der Freilauf sowohl manuell als auch automatisiert einfach montierbar ist.

### Offenbarung der Erfindung

Erfindungsgemäß wird die Aufgabe durch den Gegenstand der Patentansprüche 1 und 7 gelöst. Die abhängigen Ansprüche definieren bevorzugte Weiterbildungen der Erfindung.

Die Aufgabe wird dadurch gelöst, dass die Haltescheibe in radialer Richtung mit mindestens einer Öffnung ausgebildet ist. Die Haltescheibe umgreift die Schulter zur Sicherung in axialer Richtung und ist zumindest mit einer halbkreisförmigen Bohrung ausgebildet, die eine Spielpassung zum Drehmomentübertragungsteil ausbildet. Die Haltescheibe dichtet und deckt den durch den Mitnehmer und die Führungsscheibe mit Stützelementansätzen gebildeten Käfig für Schmiermittel ab.

Gemäß einer Ausführungsform ist lediglich die an der Verschlusskappe anliegende Fläche mehrteilig ausgebildet. Die Haltescheibe bildet zusammen mit einer Führungsscheibe die anliegende Fläche.

Erfindungsgemäß ist die Haltescheibe in der Fläche gesehen U-förmig ausgebildet. Vorteilhaft daran ist, dass die Schulter im Wesentlichen von einer einzigen Haltescheibe formschlüssig gegen axiale Verschiebung gesichert ist. Die Haltescheibe schafft zur Führungsscheibe eine definierte Höhe, bzw. Stärke, so dass nach einem Zusammenfügen der beiden Scheiben die Verschlusskappe zusammen mit dem Mitnehmer eine definierte und reproduzierbare Außenbreite beziehungsweise Distanz aufweist, egal ob die Haltescheibe vollautomatisiert oder manuell auf die Führungsscheibe eingesetzt, bzw. eingeschoben worden ist. Eine definierte Breite, die durch Montage wie konstruktiv vorgesehen realisiert ist, hat den Vorteil, dass das Gehäuse des Starters kompakt ausgebildet sein kann und die Gefahr vermieden wird, dass der Freilauf aufgrund des axial beweglichen Freilaufs an dem Antriebslager anstößt, um eine Brennkraftmaschine zu starten. Der Freilauf hat eine größere Breite, wenn die Haltescheibe breiter ist, wenn beispielsweise die Haltescheibe in Form von zwei Halbscheiben unerwünscht überlappen und somit die Verschlusskappe von der Führungsscheibe weiter entfernt ist, als konstruktiv geplant. Erfindungsgemäß werden also Montagefehler vermieden. Diese Montagefehler sind von der Konstruktion des Starters grundsätzlich nicht vorgesehen. Die Montagefehler können aber bei einem Wechsel von der vollautomatisierten Fertigung zur teilweise manuellen Fertigung auftreten. Montagefehler können zu einem erhöhten Verschleiß der Außenoberfläche vom Freilauf aufgrund erhöhter Reibung und thermischer Belastung und somit zu einer Lebensdauerverkürzung des Starters führen.

Weiter erfindungsgemäß ist, um die Haltescheibe definiert einzusetzen, die Haltescheibe bevorzugt formschlüssig mit einem aus der Führungsscheibe hervorgehobenen Abschnitt zusammensetzbar, der zumindest einen flächigen Halbkreis zu einem Kreis von einem offenen U der Haltescheibe schließt. Ein formschlüssiges Zusammenfügen beziehungsweise -schieben der Haltescheibe an die Schulter und das Anlegen an die Führungsscheibe, die gleichzeitig eine Führungsscheibe für die Rollen im Freilauf ist, hat den Vorteil, dass die Haltescheibe manuell definiert und in hoher Qualität reproduzierbar einfach einsetzbar ist. Eine aufwändige Automatisierung ist somit nicht zwingend erforderlich. Eine automatisierte Fertigung erfolgt zudem deutlich einfacher. Auch eine mögliche manuell ausgeführte Montage ist fehlerfreier ausführbar.

Um die Montage zu vereinfachen und bei der Montage Toleranzen zum Einführen der Haltescheibe an die Schulter und in den Formschluss zuzulassen, sowie um die Verletzungsgefahr zu senken, sind vorzugsweise die Schenkel der U-förmigen Haltescheibe abgerundet.

Um den Starter mit einem möglichst geringen Gewicht herzustellen, ist vorzugsweise die Haltescheibe aus Kunststoff hergestellt.

Gemäß einer alternativen Ausführungsform, um eine möglichst verschleißfreie und möglichst langlebige Haltescheibe bereitzustellen, ist diese vorzugsweise aus Metall hergestellt.

Gemäß einer alternativen Ausführungsform bildet der Rollenbund mit einer Führungsnut die Schulter im Drehmomentübertragungsteil. Dies hat den Vorteil, dass das Drehmomentübertragungsteil ein kompaktes Bauteil sein kann, das in zwei axialen Richtungen gesichert ist.

Um Montageschritte und Fertigungsschritte einzusparen, ist anwendungsspezifisch bedingt und optimiert vorzugsweise das Drehmomentübertragungsteil als einstückiges Starterritzel ausgebildet.

Die Aufgabe wird auch durch einen Starter mit oben beschriebenen Merkmalen gelöst.

Die Aufgabe wird auch dadurch gelöst, dass zumindest eine Haltescheibe in radialer Richtung mit mindestens einer Öffnung an die Schulter an einem zur Mitte des Drehmomentübertragungsteils weisenden Ende vom Rollenbund von zumindest einer Seite eingeschoben wird und anschließend mit einer Verschlusskappe der Mitnehmer geschlossen wird. Dies hat den Vorteil, dass das Drehmomentübertragungsteil mit einem Rollenbund und zumindest einer Schulter einstückig oder als Steckritzel auch mehrstückig herstellbar ist und das Starterritzel gegen axiale Verschiebung durch eine Haltescheibe in axialer Richtung gesichert wird.

Gemäß einem wichtigen Erfindungsgedanken wird die Haltescheibe formschlüssig an die Führungsscheibe in einen flächig hervorgehobenen Abschnitt eingeschoben, wobei der gesondert hervorgehobene Abschnitt die gleiche Stärke wie die der Haltescheibe aufweist. Somit wird ein Überlappen von zwei Hälften einer Haltescheibe als Distanzeinsatz besser vermieden. Die Haltescheibe, die dazu dient, Schmiermittel im Mitnehmer eingeschlossen im Käfig zurückzuhalten und das Starterritzel in axialer Richtung festzulegen, wird manuell mit einer hohen Sicherheit und einer hohen Reproduzierbarkeitsquote in der Fertigung eines Freilaufs eingesetzt. Somit ist ein Freilauf sowohl manuell, als auch automatisiert, sehr einfach fehlerfrei montierbar. Die Fehlerquote eines zu großen Abstands durch die Haltescheibe innerhalb der Verschlusskappe sinkt erheblich und dadurch steigt die Qualität und Lebensdauer der, insbesondere auch zumindest teilweise, manuell fertigbaren Anlasservorrichtung.

Es versteht sich, dass die vorstehend genannten und nachstehend noch zu erläuternden Merkmale nicht nur in der jeweils angegebenen Kombination, sondern auch in anderen Kombinationen verwendbar sind.

### Kurze Beschreibung der Zeichnungen

Die Erfindung wird im Folgenden unter Bezugnahme auf die Zeichnungen näher erläutert. Es zeigen:
- Fig. 1: einen Querschnitt durch einen Freilauf,
- Fig. 2: eine U-förmige Haltescheibe,
- Fig. 3: eine Führungsscheibe in perspektivischer Ansicht,
- Fig. 4: einen Freilauf ohne Verschlusskappe in perspektivischer Ansicht und
- Fig. 5: eine nicht erfindungsgemäße Ausführungsform eines Freilaufs mit zwei Halbscheiben als Haltescheibe.

### Ausführungsformen der Erfindung

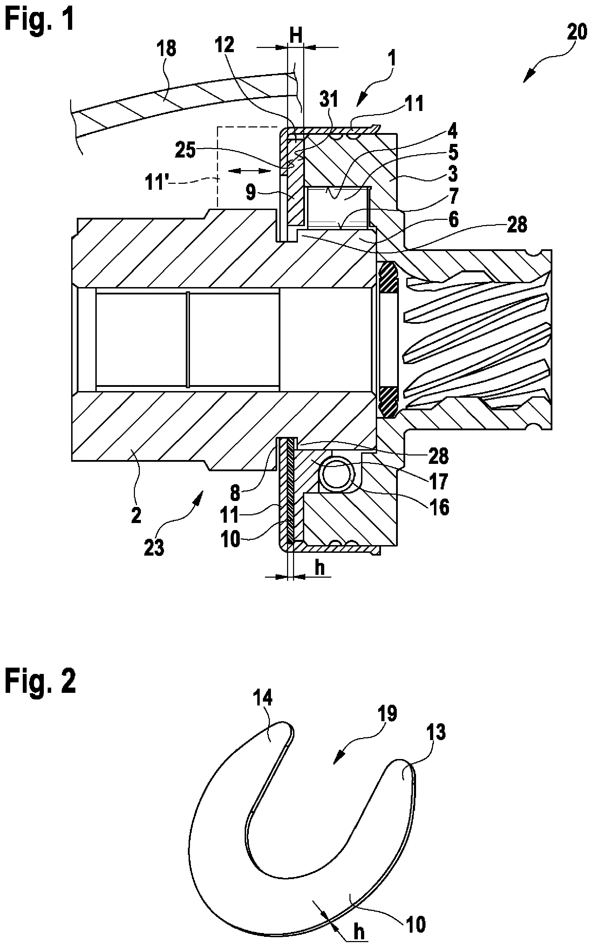

Die Fig. 1 zeigt einen Freilauf 1 im Querschnitt von einem Starter 20. Der Freilauf 1 ist in einem Gehäuse vom Antriebslager 18 des Starters 20 untergebracht und umfasst ein Starterritzel 2, das als Drehmomentübertragungsteil 23 dient. Für einen Startvorgang wird das Starterritzel 2 in den Zahnkranz einer Brennkraftmaschine eingeschoben, um die Brennkraftmaschine zu starten.

Der Freilauf 1 erfüllt die Funktion, dass das Starterritzel 2 beim Starten der Brennkraftmaschine dieser in der Dekompressionsphase mit einer höheren Drehzahl folgen kann, als durch den elektrischen Startermotor im Starter 20 vorgegeben. Dieser Vorgang wird als Überholen bezeichnet. Der Überholvorgang tritt im Allgemeinen bei jeder Dekompression der Brennkraftmaschine auf. Der Überholvorgang am laufenden Verbrennungsmotor ist sehr kurz, da nach dem Starten der Brennkraftmaschine das Starterritzel am Zahnkranz ausgespurt wird.

Der Freilauf 1 umfasst einen Mitnehmer 3, der das Drehmoment vom elektrischen Startermotor überträgt. Der Mitnehmer 3 weist eine innere Keilbahn 4 im Mitnehmer auf, in der Rollen 5 reibschlüssig und laufbar angeordnet sind. Die Rollen 5 sind durch Federn 16 vorgespannt, Führungselemente 17 halten die Federn 16 in Position. Die Führungselemente 17 sind ganz oder teilweise Ansätze an einer Führungsscheibe 9, die die Federn 16 führt. Die Rollen 5 werden von einem Rollenbund 6 getragen, der ein einstückiges Bauteil mit dem Starterritzel 2 bildet. Die Rollen 5 kontaktieren somit als Außenumfangsfläche die Keilbahn 4 im Mitnehmer des Mitnehmers 3 und als innere Umfangsfläche eine Umfangsfläche am Starterritzel 7 vom Rollenbund 6. Zwischen Starterritzel 2 und Rollenbund 6 ist eine Führungsnut 8 in dem Bauteil ausgebildet. Die Führungsnut 8 umfasst eine Schulter 28, die im Inneren des Mitnehmers 3 angeordnet und von diesem überdeckt ist.

Um das Starterritzel 2 in axialer Richtung zu sichern und einen Austritt von Schmiermitteln aus dem Rollenkäfig zu verhindern, wird an eine Führungsscheibe 9 eine Haltescheibe 10 angeordnet und gemäß einem erfindungsgemäßen Herstellungsverfahren formschlüssig eingeschoben. Dies kann kostengünstig sowohl manuell oder automatisiert durch einen Fertigungsroboter erfolgen. Die Haltescheibe 10 hält die umlaufende Schulter 28 von der Führungsnut 8 durch ein formschlüssiges Überlappen in einer Spielpassung axial zurück, so dass eine axiale Sicherung des Drehmomentübertragungsteils 23 im Freilauf 1 vorliegt.

Erfindungsgemäß ist die Position der Haltescheibe 10 durch einen erhobenen, stärkeren Profilabschnitt 12, der sich aus der Führungsscheibe 9 hervorhebt definiert. Die Haltescheibe 10 überlappt sich grundsätzlich nirgends mit einer zweiten Fläche, beispielsweise mit dem erhobenen Profilabschnitt 12, wenn die Verschlusskappe 11 mit Presskräften mit dem Mitnehmer form- und/oder kraftschlüssig zusammengefügt wird. Durch das Vermeiden einer Überlappung und durch den zusätzlichen erhobenen Profilabschnitt 12 ist die Stärke beziehungsweise die Höhe H von einer Stirnseite des Mitnehmers 31 vom Mitnehmer 3 bis zur anliegenden Fläche 25 der Verschlusskappe 11 überall gleich groß, so dass ein gleichmäßiger Andruck durch die Verschlusskappe 11 auf die Führungsscheibe 9 mit den Ansätzen von Führungselementen 17 gleichmäßig groß ist.

Durch die exakte und mit einer geringeren Fehlerquote reproduzierbare Montage von Freiläufen 1 in Startern 20 sinkt das Risiko deutlich, dass die Verschlusskappe einen größeren Abstand als die Höhe H bei der Montage erfährt, so dass die Gefahr deutlich reduziert wird, das Antriebslager 18 beim Einspuren des Starterritzels 2 sowohl bei einem frei ausstoßenden Starter, als auch bei einem Maulstarter zu berühren. Beispielhaft ist die Position der Verschlusskappe 11' in einer eingerückten Position dargestellt. Die Situation wäre verschärft, wenn die Verschlusskappe 11' nicht wie vorgesehen, sondern mit einer größeren Höhe H montiert wäre. Wird das Antriebslager 18 von dem Freilauf 1 aufgrund mangelhafter Montage berührt, so steigt der Verschleiß durch Berühren der Oberfläche von der Verschlusskappe 11, da diese sich mit dem gesamten Starter 20 thermisch erhitzt, so dass es zu einer Lebensdauerverkürzung des Starters 20 kommen könnte. Bei einem Maulstarter kann die Verschlusskappe bei fehlerhafter Montage den Zahnkranz der Brennkraftmaschine berühren. Dadurch verschleißt das Gesamtsystem schnell.

Fig. 2 zeigt in einer perspektivischen Ansicht eine bevorzugte Ausführungsform der Haltescheibe 10. Die Haltescheibe 10 ist in U-Form ausgebildet mit Abrundungen an den Enden ihrer Schenkel 13, 14. Die Haltescheibe 10 ist vorzugsweise aus Kunststoff hergestellt. Sie weist eine Stärke h auf, die der Höhe des exponierten Bereichs beziehungsweise des erhobenen Profilabschnitts 12 entspricht. Die Haltescheibe 10 ist in der Draufsicht vom Außenumfang her gesehen kreisförmig ausgebildet. Sie weist einen konzentrischen, inneren Halbkreis mit einer radialen Öffnung 19 auf, die durch zwei parallel verlaufende Innenschenkel bestimmt ist.

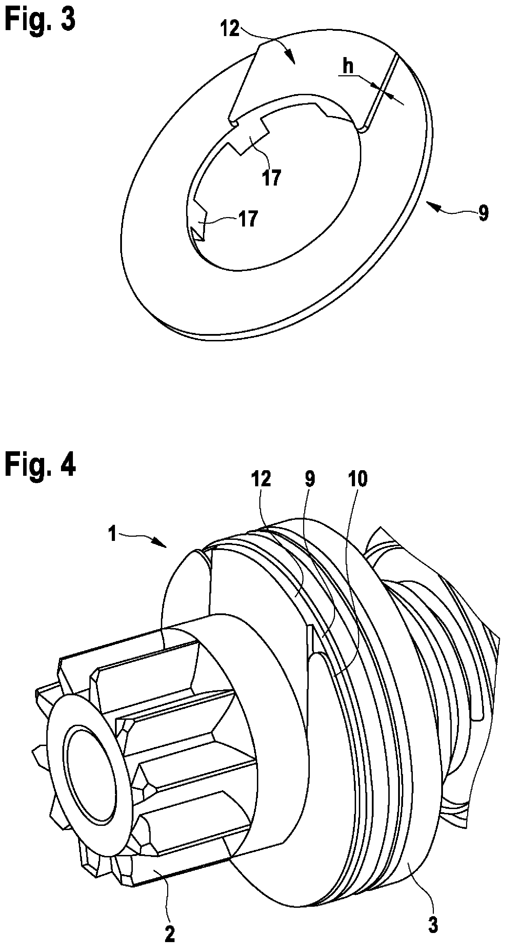

Fig. 3 zeigt in einer perspektivischen Ansicht die Führungsscheibe 9 mit Ansätzen als Führungselement 17. Das Führungselement 17 dient dazu, die Rollen 5 und Federn 16 zu lagern, zu positionieren und zu tragen. Die Führungsscheibe 9 ist ringförmig ausgebildet. Auf der gegenüberliegenden Seite der Ansätze mit dem Führungselement 17 ist ein komplementärer erhobener Abschnitt 12 ausgebildet, der formschlüssig die in Fig. 2 gezeigte Haltescheibe 10 in der Öffnung 19 in parallelen Schenkeln 13, 14 aufnimmt und somit einen von der U-förmigen Haltescheibe 10 offenen Ring schließt. Der erhobene Abschnitt 12 hat die Stärke h.

Die Fig. 4 zeigt den Freilauf 1 in einer perspektivischen Ansicht ohne die Verschlusskappe 11. Die Führungsscheibe 9 verdeckt die Rollen im Freilauf 1. Zur axialen Sicherung des Starterritzels 2 ist von unten her die Haltescheibe 10 formschlüssig eingeschoben.

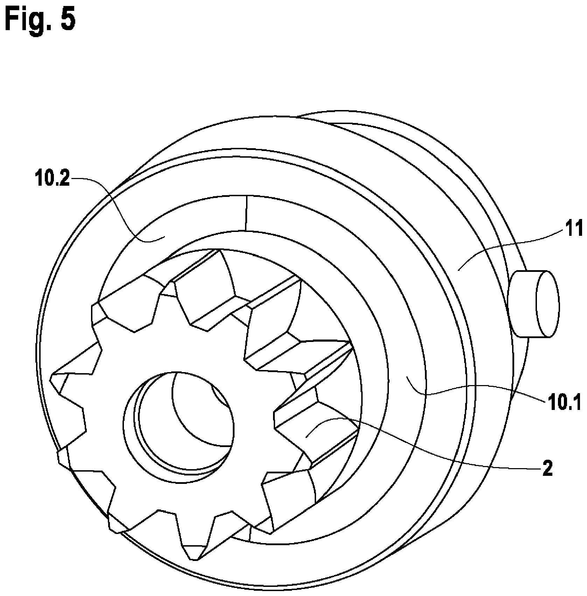

Die Fig. 5 zeigt in einer perspektivischen Stirnansicht den Freilauf 1 in einer alternativen Ausführungsform. Bei dieser Ausführungsform bilden zwei halbkreisförmige Halbscheiben eine Haltescheibe, die als Ring auf die nicht dargestellte Führungsscheibe 9 aufgesetzt ist. Die Führungsscheiben 9 werden von der Verschlusskappe 11 verdeckt. Die Haltescheibe 10 dient - wie bei der Ausführungsform gemäß der Figuren 1 bis 4 dazu, um das Schmiermittel im Rollenkäfig zu halten und eine axiale Sicherung für das Starterritzel 2 zu bieten. Bei diesen zwei Halbscheiben 10.1, 10.2 der Haltescheibe 10 tritt im Gegensatz zu der Ausführungsform gemäß den Figuren 1 bis 4 jedoch der Nachteil auf, dass bei einer manuellen Fertigung die zwei Hälften unbeabsichtigt leicht überlappen können, so dass die Verschlusskappe 11 nicht mehr gleichmäßig streng mit einem gleichen Abstand zur Stirnseite des Mitnehmers 31 der Mitnehmer 3 montiert werden kann, so dass Verschleißerscheinungen wegen einer erhöhten Reibung und einer thermischen Belastung an dem Freilauf 1 und dem Antriebslager 18 auftreten können.

Die Ausführungsform gemäß den Figuren 1 bis 4 benötigt nur noch ein einziges Teil, eine einstückige Haltescheibe 10, zur Festlegung des Starterritzels 2 und ist deshalb die bevorzugte Ausführungsform.

Alle Figuren zeigen lediglich schematische, nicht maßstabsgerechte Darstellungen. Im Übrigen wird insbesondere auf die zeichnerischen Darstellungen für die Erfindung als wesentlich verwiesen.

## Patentansprüche

1. Freilauf (1) für einen Starter von einer Brennkraftmaschine, wobei der Freilauf (1) mit einem Drehmomentübertragungsteil (23) und einem Mitnehmer (3) mit einer inneren Keilbahn (4), in der Rollen (5) angeordnet sind, ausgebildet ist, wobei das Drehmomentübertragungsteil (23) einen Rollenbund (6) aufweist, auf dessen äußeren zylindrischen Umfangsfläche am Starterritzel (7) die Rollen (5) angeordnet sind, das Drehmomentübertragungsteil (23) im axialen Querschnitt gesehen eine umlaufende Schulter (28) an einem Ende des Rollenbunds (6) aufweist, die von einer an eine Führungsscheibe (9) anliegenden Haltescheibe (10) axial zurückgehalten wird, um das Drehmomentübertragungsteil (23) axial zu sichern, wobei die Führungsscheibe (9) ringförmig ausgebildet ist und die Haltescheibe (10), die Führungsscheibe (9) und die Rollen (5) mittels einer Verschlusskappe (11) mit dem Mitnehmer (3) gesichert sind, **dadurch gekennzeichnet, dass** die Haltescheibe (10) in radialer Richtung mit mindestens einer Öffnung (19) einstückig und in der Fläche gesehen U-förmig ausgebildet ist, wobei die Haltescheibe (10) formschlüssig mit einem aus der Führungsscheibe (9) erhobene Profilabschnitt (12) zusammenlegbar ist, der zumindest einen flächigen Halbkreis zu einem Kreis von einem offenen U der Haltescheibe schließt, wobei der erhobene Profilabschnitt (12) die gleiche Stärke (h) wie die Haltescheibe (10) aufweist.

2. Freilauf (1) nach Anspruch 1, **dadurch gekennzeichnet, dass** die Schenkel (13, 14) der U-förmigen Haltescheibe (10) abgerundet sind.

3. Freilauf (1) nach einem der vorgehenden Ansprüche 1 bis 2, **dadurch gekennzeichnet, dass** die Haltescheibe (10) aus Kunststoff hergestellt ist.

4. Freilauf (1) nach einem der vorgehenden Ansprüche 1 bis 3, **dadurch gekennzeichnet, dass** die Haltescheibe (10) aus Metall hergestellt ist.

5. Freilauf (1) nach einem der Ansprüche 1 bis 4, **dadurch gekennzeichnet, dass** die Schulter (28) durch den Rollenbund (6) mit einer Führungsnut (8) im Drehmomentübertragungsteil (23) ausgebildet ist.

6. Freilauf (1) nach einem der Ansprüche 1 bis 5, **dadurch gekennzeichnet, dass** das Drehmomentübertragungsteil (23) als einstückiges Starterritzel (2) ausgebildet ist.

7. Verfahren zum Herstellen eines Freilaufs für einen Starter von einer Brennkraftmaschine mit einem Drehmomentübertragungsteil (23), insbesondere nach einem der Ansprüche 1 bis 6, wobei in einem Mitnehmer (3) Rollen (5) reibschlüssig eingesteckt werden, eine ringförmig ausgebildeteFührungsscheibe (9) als Tragring mit Stützansätzen und Federn (16) eingesetzt wird, ein Drehmomentübertragungsteil (23) mit einem Rollenbund (6) als innere Stütz- und Lauffläche für die Rollen (5) eingeführt wird, **dadurch gekennzeichnet, dass** eine einstückige und in der Fläche gesehen U-förmig ausgebildete Haltescheibe (10) in radialer Richtung mit mindestens einer Öffnung (19) an einer Schulter (28) an einem zur Mitte des Drehmomentübertragungsteils weisenden Ende vom Rollenbund (6) von zumindest einer Seite eingeschoben wird und anschließend mit einer Verschlusskappe (11) der Mitnehmer (3) geschlossen wird, wobei das Drehmomentübertragungsteil (23) von der Haltescheibe (10) axial zurückgehalten wird, um das Drehmomentübertragungsteil (23) axial zu sichern, wobei die Haltescheibe (10) formschlüssig an die Führungsscheibe (9) mit einem aus der Führungsscheibe (9) flächig erhobenen Profilabschnitt (12) eingeschoben wird, der zumindest einen flächigen Halbkreis zu einem Kreis von einem offenen U der Haltescheibe schließt, wobei der erhobene Profilabschnitt (12) die gleiche Stärke (h) wie die Haltescheibe (10) aufweist.

8. Starter (20) mit einem Freilauf (1) nach einem der Ansprüche 1 bis 6.

## Claims

1. A free-wheel clutch (1) for a starter (20) of an internal combustion engine, wherein the free-wheel clutch (1) comprises:
a torque transmission part (23) and
a driving element (3) comprising an inner keyway (4) that contains rolls (5); and
the torque transmission part (23) comprising a roll collar (6), wherein the rolls (5) are disposed on an outer cylindrical periphery of the roll collar (6) on the strater pinion (7),
the torque transmission part (23), in axial cross section, comprising a peripheral shoulder (28) on an end of the roll collar (6), wherein the peripheral shoulder (28) is axially retained by a holding disc (10) applied to a guiding disc (9) in order to axially secure the torque transmission part (23),
wherein the holding disc (10), the guiding disc (9), and the rolls (5) are secured to the driving element (3) by means of a closing cap (11);
**characterized in that**,
the holding disc (10) is formed in radial direction with at least one opening (19) in one piece and planarly U-shaped,
wherein the holding disc (10) is in form-fit manner mergeable with a profile section (12) raised from the guiding disc (9), which completes at least one planar semicircle to form a circle from an open U of the holding disc (10), the raised profile section (12) being of the same thickness (h) as the holding disc (10).

2. The free-wheel clutch (1) as claimed in claim 1, wherein legs (13, 14) of the U-shaped holding disc (10) are rounded.

3. The free-wheel clutch (1) as claimed in one of the preceding claims 1 to 2, wherein the holding disc (10) is manufactured from plastic.

4. The free-wheel clutch (1) as claimed in one of the claims 1 to 3, wherein the holding disc (10) is manufactured from metal.

5. The free-wheel clutch (1) as claimed in one of the claims 1 to 4, wherein the shoulder (28) is formed by the roll collar (6) with a guiding groove (8) in the torque transmission part (23).

6. The free-wheel clutch (1) as claimed in one of the claims 1 to 5, wherein the torque transmission part (23) is formed as integrated starter pinion (2).

7. A method for manufacturing a free-wheel clutch (1), as particularly claimed in one of the claims 1 to 6, for a starter (20) of an internal combustion engine,
wherein rolls (5) are frictionally inserted in a driving element (3);
a circular guiding disc (9) is inserted as support ring having support lugs and springs (16);
a torque transmission part (23) with a roll collar (6) is inserted as inner support and as running surface for the rolls (5);
**characterized in that**,
a one piece and planarly U-shaped holding disc (10) in radial direction with at least one opening (19) on a shoulder (28) is inserted on one end of the the roll collar (6) pointing to the center of the torque transmission part (23), from at least one side, and the holding disc (10) is subsequently closed with a closing cap (11) of the driving element (3),
wherein the torque transmission part (23) is axially retained from the holding disc (10) in order to axially secure the torque transmission part (23),
wherein the the holding disc (10) is inserted in form-fit manner at the guiding disc (9) with a profile section (12) raised from the guiding disc (9), which completes at least one planar semicircle to form a circle from an open U of the holding disc (10), the raised profile section (12) being of the same thickness (h) as the holding disc (10).

8. A starter (20) comprising a free-wheel clutch (1) as claimed in one of the claims 1 to 6.

## Revendications

1. Dispositif de roue libre (1) pour un démarreur d'un moteur à combustion interne, dans lequel le dispositif de roue libre (1) est réalisé avec une partie de transmission de couple (23) et un organe d'entraînement (3) ayant une rainure de clavette intérieure (4) dans laquelle sont agencés des rouleaux (5), dans lequel la partie de transmission de couple (23) comporte un épaulement pour rouleaux (6) sur la surface circonférentielle cylindrique extérieure duquel les rouleaux (5) sont agencés sur le pignon de démarreur (7), la partie de transmission de couple (23) comporte, lorsqu'elle est vue en coupe transversale axiale, un épaulement circonférentiel (28) à une extrémité de l'épaulement pour rouleaux (6), lequel épaulement circulaire étant retenu axialement par un disque de retenue (10) adjacent à un disque de guidage (9) afin de bloquer axialement la partie de transmission de couple (23), dans lequel le disque de guidage (9) est réalisé sous forme d'anneau et le disque de retenue (10), le disque de guidage (9) et les rouleaux (5) sont bloqués avec l'organe d'entraînement (3) au moyen d'un couvercle de fermeture (11), **caractérisé en ce que** le disque de retenue (10) est formé d'un seul tenant dans une direction radiale avec au moins une ouverture (19) et en forme de U lorsqu'il est vu dans la surface, dans lequel le disque de retenue (10) peut être assemblé par complémentarité de formes avec une partie de profilé (12) surélevée à partir du disque de guidage (9), laquelle partie de profilé avec au moins un demi-cercle plat forme un cercle à partir d'un U ouvert du disque de retenue, dans lequel la partie de profilé surélevée (12) a la même épaisseur (h) que le disque de retenue (10).

2. Dispositif de roue libre (1) selon la revendication 1, **caractérisé en ce que** les branches (13, 14) du disque de retenue en forme de U (10) sont arrondies.

3. Dispositif de roue libre (1) selon l'une des revendications 1 à 2 précédentes, **caractérisé en ce que** le disque de retenue (10) est fabriqué à partir d'une matière plastique.

4. Dispositif de roue libre (1) selon l'une des revendications 1 à 3 précédentes, **caractérisé en ce que** le disque de retenue (10) est fabriqué à partir d'un métal.

5. Dispositif de roue libre (1) selon l'une des revendications 1 à 4, **caractérisé en ce que** l'épaulement (28) est réalisé à travers l'épaulement pour rouleaux (6) avec une rainure de guidage (23) dans la partie de transmission de couple (23).

6. Dispositif de roue libre (1) selon l'une des revendications 1 à 5, **caractérisé en ce que** la partie de transmission de couple (23) est réalisée sous la forme d'un pignon de démarreur monobloc (2).

7. Procédé pour fabriquer un dispositif de roue libre pour un démarreur d'un moteur à combustion interne comportant une partie de transmission de couple (23), en particulier selon l'une des revendications 1 à 6, dans lequel des rouleaux (5) sont insérés par friction dans un organe d'entraînement (3), un disque de guidage (9) réalisé sous forme d'anneau est utilisé comme anneau de support avec des extensions d'appui et des ressorts (16), une partie de transmission de couple (23) est introduite avec un épaulement pour rouleaux (6) en tant que surface d'appui et de roulement intérieure pour les rouleaux (5), **caractérisé en ce qu'**un disque de retenue (10) monobloc et réalisé en forme de U lorsqu'il est vu dans la surface est inséré à partir d'au moins un côté dans une direction radiale avec au moins une ouverture (19) sur un épaulement (28) à une extrémité de l'épaulement pour rouleaux (6) dirigée vers le centre de la partie de transmission de couple et est ensuite fermé avec un couvercle de fermeture (11) de l'organe d'entraînement (3), dans lequel la partie de transmission de couple (23) est retenue axialement par le disque de retenue (10) afin de bloquer axialement la partie de transmission de couple (23), dans lequel le disque de retenue (10) est inséré par complémentarité de formes sur le disque de guidage (9) avec une partie de profilé (12) surélevée plate à partir du disque de guidage (9), laquelle partie de profilé avec au moins un demi-cercle plat forme un cercle à partir d'un U ouvert du disque de retenue, dans lequel la partie de profilé surélevée (12) a la même épaisseur (h) que le disque de retenue (10).

8. Démarreur (20) ayant un dispositif de roue libre (1) selon l'une des revendications 1 à 6.
